# FASCICULE DE BREVET EUROPEEN

(11) **EP 4 127 431 B1**
(45) Date de publication et mention de la délivrance du brevet: **26.11.2025**
(21) Numéro de dépôt: 21715513.4
(22) Date de dépôt: 23.03.2021
(51) Int. Cl.: F01P 3/20, B60K 6/26, B60K 11/04, B60L 58/26, B60H 1/00

(54) **DISPOSITIF DE GESTION THERMIQUE POUR UN VÉHICULE AUTOMOBILE HYBRIDE**
WÄRMEMANAGEMENTVORRICHTUNG FÜR EIN HYBRIDKRAFTFAHRZEUG
THERMAL MANAGEMENT DEVICE FOR A HYBRID MOTOR VEHICLE

(30) Priorité: 30.03.2020 FR 2003122
(43) Date de publication de la demande: 08.02.2023
(73) Titulaire: Renault S.A.S., 92100 Boulogne-Billancourt (FR)
(72) Inventeur: YU, Robert, 78180 MONTIGNY LE BRETONNEUX (FR)
(86) Numéro de dépôt international: PCT/EP2021/057466
(87) Numéro de publication internationale: WO 2021/197936

(56) Documents cités:
- EP-A1- 3 121 043
- EP-A2- 2 392 486
- WO-A1-2019/166709
- DE-A1- 102017 011 430
- US-A1- 2019 375 270

## Description

### Domaine technique

La présente invention concerne un dispositif de gestion thermique pour un véhicule automobile hybride ainsi qu'un véhicule automobile hybride comprenant un tel dispositif de gestion thermique.

### Technique antérieure

Il est bien connu qu'un véhicule automobile hybride comprend deux modes de propulsion : un mode de propulsion thermique et un mode de propulsion électrique. Le mode de propulsion thermique s'appuie sur un moteur thermique. Le mode de propulsion électrique utilise un moteur électrique et une batterie adaptée pour alimenter ledit moteur électrique. La batterie a généralement une autonomie comprise entre 5 et 50 Km lorsque le véhicule est dans une utilisation unique du mode de propulsion électrique. Pour faire fonctionner ces deux modes de propulsion, il est nécessaire de prévoir un circuit général de refroidissement pour d'une part le refroidissement du moteur thermique et pour d'autre part le refroidissement du moteur électrique et de la batterie. Le circuit général de refroidissement comprend, de manière connue, un circuit à haute température, un circuit à basse température et un circuit à très basse température. Ces trois circuits assurent le refroidissement de différents organes du véhicule à différents niveaux de température. Ainsi, le circuit à haute température est destiné à refroidir le moteur thermique. Ce circuit fait circuler un fluide caloporteur dont la température maximale est comprise entre 90°C et 105°C. Le circuit à basse température est destiné à refroidir le moteur électrique. Ce circuit fait circuler un fluide caloporteur qui peut prendre une température maximale comprise entre 40°C et 80°C. Le circuit à basse température est également adapté pour refroidir un condensateur de climatisation destiné à améliorer la température de l'habitacle du véhicule automobile hybride, un refroidisseur d'air de suralimentation (RAS), un refroidisseur d'un système de recirculation des gaz d'échappement (EGR pour « Exaust Gas Recirculation » en anglais), une électronique de puissance. Un tel circuit à basse température est notamment divulgué dans le document WO200774249. Dans ce document, le circuit à basse température (noté 3) est interconnecté avec un circuit à haute température (noté 1) par l'intermédiaire d'un système de vannes pilotées (noté 114). Le système de vannes pilotées comprend quatre voies qui sont connectées à différents organes du circuit général et quatre vannes destinées à assurer ou non un passage de fluide caloporteur entre les différentes voies du système de vannes pilotées. Chaque vanne a un mode ouvert dans lequel le fluide passe entre deux voies du système de vannes pilotées et un mode fermé dans lequel le fluide ne passe pas. Ainsi, en fonction du pilotage des vannes du système de vannes pilotées, des organes du circuit général sont interconnectés ou non avec un même fluide caloporteur. Le document WO200774249 décrit un refroidissement de l'EGR et du RAS. Dans un premier temps, ce refroidissement est réalisé par le circuit à haute température du fait de la température élevée du fluide caloporteur. Dans un second temps, le refroidissement est réalisé par le circuit à basse température. Un refroidissement par deux circuits adaptés pour faire circuler des fluides caloporteurs avec des niveaux de température différents est également divulgué dans le document FR2895451. Enfin le circuit à très basse température du circuit général de refroidissement est destiné à refroidir la batterie. Ce circuit fait circuler un fluide caloporteur qui va prendre une température maximale inférieure à 40°C. Chaque circuit à haute température, à basse température et à très basse température comprend respectivement des échangeurs thermiques (un radiateur à haute température, un radiateur à basse température, un radiateur à très basse température, un échangeur thermique liquide/réfrigérant). Ces échangeurs thermiques sont généralement disposés dans la partie avant du véhicule à proximité du condensateur de climatisation. Ainsi, il faut prévoir des échangeurs thermiques suffisamment volumineux pour assurer l'évacuation des calories des organes de chaque circuit. Ces échangeurs thermiques sont notamment dimensionnés pour faire face à des exigences de refroidissement lorsque les organes fonctionnent à leur plus grosse puissance thermique. De plus, les exigences des clients augmentant et les performances des véhicules s'améliorant, la puissance thermique dégagée par les organes des circuits s'accroit également. Or l'encombrement disponible dans la partie avant du véhicule est limité et un accroissement sans limite de la taille des échangeurs thermiques n'est donc pas possible. Le document EP3121043A1 décrit un dispositif de gestion thermique d'un véhicule hybride.

Il existe alors un besoin d'optimiser la gestion thermique d'un véhicule automobile hybride afin d'en améliorer son refroidissement sans augmenter la taille des échangeurs thermiques (radiateurs, échangeur thermique liquide/réfrigérant) du circuit général tout en satisfaisant les nouveaux besoins des clients en matière d'augmentation de puissance du véhicule.

### Exposé de l'invention

La présente invention vise à remédier au moins en partie à ce besoin.

Plus particulièrement, la présente invention vise à améliorer l'utilisation des échangeurs thermiques d'un véhicule automobile hybride pour en améliorer son refroidissement, et ceci quel que soit le mode de fonctionnement de ce véhicule (mode thermique pure, mode électrique pure, mode hybride, mode recharge).

Un premier objet de l'invention concerne un dispositif de gestion thermique pour un véhicule automobile hybride, ledit véhicule automobile hybride comprenant un moteur thermique, un moteur électrique, une batterie pour l'alimentation dudit moteur électrique. Le dispositif de gestion thermique comporte :
- un circuit général de refroidissement adapté pour faire circuler un fluide caloporteur ;
- des échangeurs thermiques pour le refroidissement dudit fluide caloporteur ;
- des moyens d'interconnexion entre les différents échangeurs thermiques du fluide caloporteur.
Les moyens d'interconnexion comprennent au moins deux systèmes de vannes pilotées, chaque système de vannes pilotées comportant au moins deux voies pour interconnecter tout ou partie des différents échangeurs thermiques en vue d'optimiser le refroidissement du moteur thermique et/ou de la batterie et/ou du moteur électrique par ledit fluide caloporteur circulant dans au moins une boucle de refroidissement.

Ainsi, avec les au moins deux systèmes de vannes pilotées, il est possible d'améliorer l'interconnexion des différents échangeurs thermiques en vue d'optimiser le refroidissement de différentes sources chaudes (moteur thermique, batterie, moteur électrique) du véhicule automobile hybride. Par système de vannes pilotées on entend un boîtier comportant n entrées et m vannes internes au boîtier. Les n entrées sont en relation fluidique avec le reste du circuit général de refroidissement et les m vannes sont destinées à mettre en relation fluidique, à l'intérieur du boîtier, un couple d'entrées dudit boîtier. Dans certains modes de fonctionnement du véhicule automobile hybride, un ou plusieurs radiateurs des différents circuits du circuit général de refroidissement peuvent ne pas fonctionner alors qu'un ou plusieurs autres radiateurs peuvent fonctionner à pleine puissance. Ainsi, dans un mode thermique pure, le radiateur à haute température fonctionne à sa puissance maximale pour refroidir le moteur thermique. Dans un mode de recharge, c'est le radiateur à très basse température qui est sollicité pour refroidir la batterie. En pilotant les au moins deux systèmes de vannes pilotées, il est possible de mutualiser les capacités de refroidissement des différents radiateurs en fonction des sources chaudes à refroidir. Par exemple, dans un mode thermique pure, le moteur thermique peut être à la fois refroidi par le radiateur à haute température et par le radiateur à très basse température. Dans un mode de recharge, la batterie peut être refroidie à la fois par le radiateur à haute température, le radiateur à basse température et le radiateur à très basse température et l'échangeur thermique liquide/réfrigérant. On utilise ainsi aux mieux les capacités de refroidissement des différents échangeurs thermiques du circuit général de refroidissement, sans avoir à augmenter, au moins dans un premier temps, les tailles des différents radiateurs. Par boucle de refroidissement, on entend un ensemble de conduites qui vont former un ensemble fermé pour le liquide caloporteur. En fonction des arrangements des systèmes de vannes pilotées, les conduites de la boucle de refroidissement appartiennent à un même circuit à haute température ou circuit à basse température ou circuit à très basse température du circuit général de refroidissement. En variante, la boucle de refroidissement comprend des conduites appartenant à différents circuits (circuit à haute température, circuit à basse température, circuit à très basse température).

Dans une mode de réalisation particulier, les moyens d'interconnexion comprennent au moins trois systèmes de vannes pilotées, chaque système de vannes pilotées comportant quatre voies.

**Il** est ainsi possible d'interconnecter au mieux les différents circuits du circuit général de refroidissement en vue d'optimiser le refroidissement des sources chaudes dans les différents modes de fonctionnement du véhicule automobile hybride. Ces différents modes de fonctionnement comprennent : un mode de recharge rapide, un mode de recharge rapide de forte puissance, un mode de recharge rapide avec échangeur thermique liquide/réfrigérant, un mode électrique pure, un mode électrique pure avec échangeur thermique liquide/réfrigérant, un mode hybride, un mode hybride avec échangeur thermique liquide/réfrigérant selon un premier type de fonctionnement, un mode hybride avec échangeur liquide/réfrigérant selon un second type de fonctionnement, un mode thermique pure selon un premier type de fonctionnement, un mode thermique pure selon un second type de fonctionnement.

Dans un autre mode de réalisation, les échangeurs thermiques sont choisis parmi une liste d'échangeurs thermiques comprenant :
- un radiateur à haute température ;
- un radiateur à basse température ;
- un radiateur à très basse température ;
- un échangeur thermique liquide/réfrigérant.

Dans le circuit général de refroidissement, un radiateur est un échangeur thermique air/liquide adapté pour extraire des calories d'un fluide caloporteur et les céder à un courant d'air le traversant. Le radiateur à haute température est ainsi adapté pour extraire d'un fluide caloporteur hautement chauffé une grande quantité de calories. Le radiateur à basse température est adapté pour extraire une quantité de calories plus faible d'un fluide caloporteur. Le radiateur à très basse température est adapté pour extraire une très faible quantité de calories d'un fluide caloporteur. Le radiateur à haute température a donc une capacité de refroidissement supérieure au radiateur à basse température. Le radiateur à basse température à quant à lui une capacité de refroidissement supérieure au radiateur à très basse température. L'échangeur thermique liquide/réfrigérant, appelé également « chiller », est un dispositif d'échange thermique qui élimine des calories d'un fluide caloporteur via un cycle de réfrigération à compression ou à absorption de vapeur. C'est un échangeur entre le liquide caloporteur et un réfrigérant (fluide à changement de phase liquide/gaz).

Dans un autre mode de réalisation, les systèmes de vannes pilotées sont arrangés de sorte que le radiateur à haute température et/ou le radiateur à basse température et/ou le radiateur à très basse température et/ou l'échangeur thermique liquide/réfrigérant refroidissent le moteur électrique. Il est ainsi possible de refroidir ledit moteur électrique avec un ou plusieurs échangeurs thermiques combinés.

Dans un autre mode de réalisation, les systèmes de vannes pilotées sont arrangés de sorte que le radiateur à haute température et/ou le radiateur à très basse température refroidissent le moteur thermique. Il est ainsi possible de refroidir ledit moteur thermique avec un ou plusieurs échangeurs thermiques combinés.

Dans un autre mode de réalisation, les systèmes de vannes pilotées sont arrangés de sorte que le radiateur à haute température et/ou le radiateur à basse température et/ou le radiateur à très basse température et/ou l'échangeur thermique liquide/réfrigérant refroidissent la batterie. Il est ainsi possible de refroidir ladite batterie avec un ou plusieurs échangeurs thermiques combinés.

Selon l'invention, le radiateur à haute température et le radiateur à très basse température sont couplés. Ce couplage est réalisé grâce à une restriction de section telle qu'un bouchon percé par une pluralité de petits passages verticaux qui permettent une communication fluidique entre le radiateur à haute température et le radiateur à très basse température ou un tube. Dans un mode de réalisation particulier, le radiateur à haute température et le radiateur à très basse température sont séparés par une cloison et ils forment un radiateur unique. Dans une autre variante, le radiateur à haute température et le radiateur à très basse température sont physiquement séparés et ils peuvent se trouver sur deux plans différents. Ceci permet, par exemple de mettre le radiateur à très basse température devant le radiateur à haute température à l'avant du véhicule automobile hybride.

Dans un autre mode de réalisation, les systèmes de vannes pilotées sont arrangés pour former une seule boucle de refroidissement. Une telle boucle de refroidissement est notamment formée dans un mode de recharge rapide du véhicule automobile hybride.

Dans un autre mode de réalisation, les systèmes de vannes pilotées sont arrangés pour former deux boucles de refroidissement. Ces deux boucles de refroidissement sont notamment formées dans les modes de fonctionnement du véhicule automobile hybride suivants : mode de recharge rapide de forte puissance, mode de recharge rapide avec échangeur thermique liquide/réfrigérant, mode électrique pure, mode électrique pure avec échangeur thermique liquide/réfrigérant, mode thermique pure selon un premier type de fonctionnement, mode thermique pure selon un second type de fonctionnement.

Dans un autre mode de réalisation, les systèmes de vannes pilotées sont arrangés pour former trois boucles de refroidissement. Ces trois boucles de refroidissement sont notamment formées dans les modes de fonctionnement du véhicule automobile hybride suivants : mode hybride, mode hybride avec échangeur thermique liquide/réfrigérant selon un premier type de fonctionnement, mode hybride avec échangeur thermique selon un second type de fonctionnement. Ainsi au cours du fonctionnement du véhicule automobile hybride, le fluide caloporteur du circuit à haute température peut atteindre des températures maximales comprises entre 90°C et 105°C dans une boucle de refroidissement comprenant le radiateur à très haute température. Ce fluide caloporteur peut atteindre des températures maximales supérieures à 40°C dans une boucle de refroidissement comprenant le radiateur à basse température. Le fluide caloporteur peut atteindre des températures maximales supérieures à 20°C dans une boucle de refroidissement comprenant le radiateur à très basse température. Le fluide caloporteur est adapté pour fonctionner à des températures différentes dans le circuit général de refroidissement. Le fluide caloporteur comprend un mélange d'eau et d'éthylène glycol comportant, avantageusement, des agents anticorrosion.

Un autre objet de l'invention concerne un véhicule automobile hybride comprenant un dispositif de gestion thermique selon le premier objet de l'invention.

La présente invention sera mieux comprise à la lecture de la description détaillée de modes de réalisation pris à titre d'exemples nullement limitatifs et illustrés par les dessins annexés sur lesquels :
- la figure 1 est une vue schématique d'un circuit général de refroidissement pour un véhicule automobile hybride selon l'invention ;
- la figure 2 représente le mode de réalisation selon l'invention d'un couplage entre le radiateur à haute température et le radiateur à très basse température du circuit général de refroidissement de la figure 1 ;
- les figures 3A, 3B, 3C représentent des exemples de réalisation de trois système de vannes à quatre voies du circuit général de refroidissement de la figure 1 ;
- la figure 4 est une vue schématique du circuit général de refroidissement de la figure 1 en fonctionnement selon un premier mode de fonctionnement du véhicule automobile hybride dit mode de recharge rapide ;
- la figure 5 est une vue schématique du circuit général de refroidissement de la figure 1 en fonctionnement selon un second mode de fonctionnement du véhicule automobile hybride dit mode de recharge rapide de forte puissance ;
- la figure 6 est une vue schématique du circuit général de refroidissement de la figure 1 en fonctionnement selon un troisième mode de fonctionnement du véhicule automobile hybride dit mode de recharge rapide avec échangeur thermique liquide/réfrigérant ;
- la figure 7 est une vue schématique du circuit général de refroidissement de la figure 1 en fonctionnement selon un quatrième mode de fonctionnement du véhicule automobile hybride dit mode électrique pure ;
- la figure 8 est une vue schématique du circuit général de refroidissement de la figure 1 en fonctionnement selon un cinquième mode de fonctionnement du véhicule automobile hybride dit mode électrique pure avec échangeur thermique liquide/réfrigérant ;
- la figure 9 est une vue schématique du circuit général de refroidissement de la figure 1 en fonctionnement selon un sixième mode de fonctionnement du véhicule automobile hybride dit mode hybride ;
- la figure 10 est une vue schématique du circuit général de refroidissement de la figure 1 en fonctionnement selon un septième mode de fonctionnement du véhicule automobile hybride dit mode hybride avec refroidisseur selon un premier type de fonctionnement ;
- la figure 11 est une vue schématique du circuit général de refroidissement de la figure 1 en fonctionnement selon un huitième mode de fonctionnement du véhicule automobile hybride dit mode hybride avec échangeur thermique liquide/réfrigérant selon un second type de fonctionnement ;
- la figure 12 est une vue schématique du circuit général de refroidissement de la figure 1 en fonctionnement selon un neuvième mode de fonctionnement du véhicule automobile hybride dit mode thermique pure selon un premier type de fonctionnement ;
- la figure 13 est une vue schématique du circuit général de refroidissement de la figure 1 en fonctionnement selon un dixième mode de fonctionnement du véhicule automobile hybride dit mode thermique pure selon un second type de fonctionnement ;
- la figure 14 est un tableau résumant le fonctionnement des différents modes de réalisation des figures 4 à 13.

L'invention n'est pas limitée aux modes de réalisation et variantes présentées et d'autres modes de réalisation et variantes apparaîtront clairement à l'homme du métier.

Sur les différentes figures, les éléments identiques ou similaires portent les mêmes références.

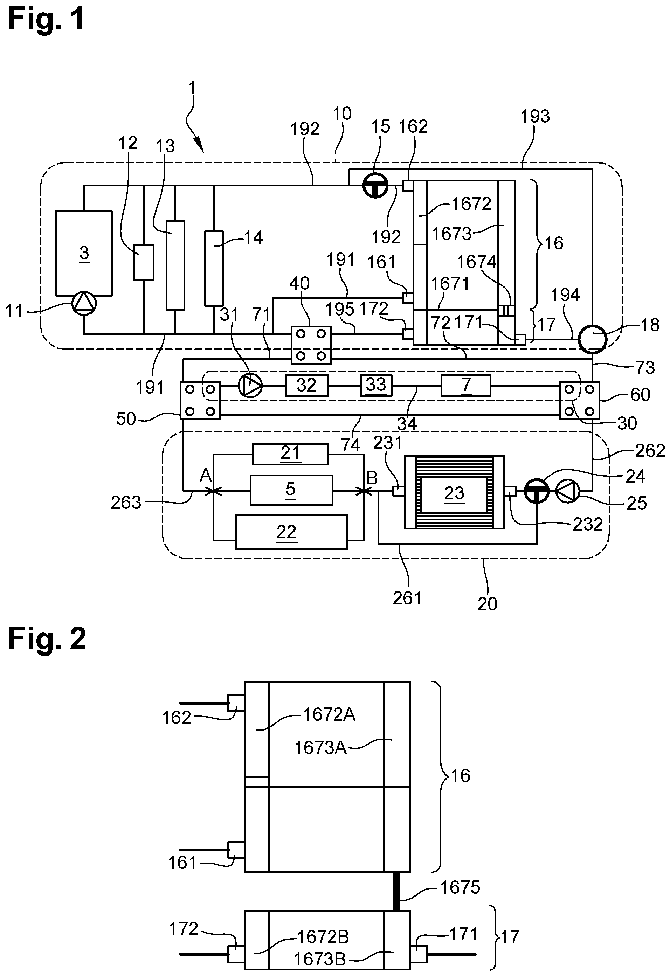

La figure 1 représente schématiquement un circuit général de refroidissement 1 pour un véhicule automobile hybride. Ce circuit général de refroidissement 1 comprend un circuit à haute température 10, un circuit à basse température 20 et un circuit à très basse température 30. Chacun des circuits 10, 20, 30 est délimité par des pointillés sur la figure 1. Les trois circuits 10, 20, 30 assurent le refroidissement à différents niveaux de température de différents organes du véhicule automobile hybride tels que : un moteur thermique 3, un moteur électrique 5 et une batterie 7. Le moteur thermique 3 est adapté pour fournir un couple moteur à partir d'une énergie fossile. Le moteur électrique 5 est adapté pour fournir un couple moteur à partir d'une énergie électrique. La batterie 7 est destinée à alimenter en énergie électrique le moteur électrique 5.

Le circuit à haute température 10 du circuit général de refroidissement 1 comprend :
- une pompe 11 ;
- un vase d'expansion 12 ;
- un radiateur de chauffage de l'habitacle 13 ou aérotherme ;
- un échangeur eau/huile de lubrification 14 du moteur 3 ;
- un thermostat principal 15 ;
- un radiateur à haute température 16 comprenant une première entrée 161 et une seconde entrée 162 ;
- un radiateur à très basse température 17 comprenant une première entrée 171 et une seconde entrée 172 ;
- une vanne 18 ;
- un ensemble de conduites comprenant une conduite moteur amont 191, une conduite moteur aval 192, une première conduite 193, une seconde conduite 194, une troisième conduite 195.

On notera dès à présent que la première entrée 161, la seconde entrée du radiateur à haute température 16 et la première entrée 171 et la seconde entrée 172 du radiateur à très basse température 17 peuvent aussi être des sorties selon le monde de fonctionnement qui influe le sens d'écoulement du fluide dans le circuit à haute température 10.

Dans le circuit à haute température 10, le moteur 3 du véhicule automobile hybride est relié au radiateur à haute température par la conduite moteur amont 191 et la conduite moteur aval 192. La conduite moteur amont 191 relie ainsi la première entrée 161 du radiateur à haute température 16 au moteur thermique 3 en passant par la pompe 11. Cette pompe 11 permet la circulation du fluide caloporteur dans le circuit à haute température 10. Cette pompe 11 est, par exemple, une pompe mécanique entraînée par le moteur thermique 3. La conduite moteur aval 192 relie le moteur thermique 3 à la seconde entrée 162 du radiateur à haute température 16 en passant par le thermostat principal 15. Le thermostat principal 15 permet de couper dans une position fermée ou d'autoriser dans une position ouverte la circulation du fluide caloporteur entre le moteur thermique 3 et le radiateur à haute température 16 afin de réguler la température de ce fluide caloporteur. Ce thermostat principal 15 est, par exemple, de type à cire à simple effet ou de type piloté. Le vase d'expansion 12, le radiateur de chauffage de l'habitacle 13, l'échangeur eau/huile de lubrification 14 sont, chacun d'eux, montés en pont entre la conduite moteur amont 191 et la conduite moteur aval 192. Le vase d'expansion 12 permet le remplissage et la régulation en pression du circuit. Le radiateur de chauffage de l'habitacle 13 permet le chauffage de l'habitacle du véhicule automobile hybride lorsqu'un tel chauffage est demandé. L'échangeur eau/huile de lubrification 14 est adapté pour refroidir l'huile servant à lubrifier le moteur thermique 3. La première branche 193 de l'ensemble de conduites relie la conduite moteur aval 192 à la vanne 18. Cette vanne 18 est reliée par une seconde branche 194 à la première entrée 171 du radiateur à très basse température 17. Ce circuit à haute température 10 peut également refroidir d'autres organes du groupe motopropulseur, tels qu'un échangeur eau/huile de la boîte de vitesse automatique ou un palier de turbocompresseur.

On notera que le radiateur à haute température 16 et le radiateur à très basse température 17 forment ici un seul radiateur cloisonné. Ce radiateur cloisonné comprend ainsi :
- une cloison 1671 ;
- une boîte à eau verticale comprenant une première partie 1672 et une seconde partie 1673 ;
- un bouchon 1674.

La cloison 1671 permet une séparation entre le radiateur à haute température 16 et le radiateur à très basse température 17. Cette cloison 1671 est insérée entre la première partie 1672 de la boîte à eau et la seconde partie 1673 de ladite boîte à eau à une même hauteur. Plus particulièrement, la cloison 1671 est insérée dans la seconde partie 1673 au niveau du bouchon 1674. Ce bouchon 1674 est ici percé par une pluralité de petits passages verticaux qui permettent une communication fluidique entre le radiateur à haute température 16 et le radiateur à très basse température 17. On notera que la première partie 1672 de la boîte à eau et la seconde partie 1673 de ladite boîte à eau sont connectés par des faisceaux de tubes horizontaux (non représentés).

La figure 2 représente un couplage entre le radiateur à haute température 16 et le radiateur à très basse température 17 selon l'invention. Comme dans le mode de réalisation précédent, le radiateur à haute température 16 comprend une boîte à eau comportant une première partie 1672A et une seconde partie 1673A. Cette première partie 1672A et cette seconde partie 1673A sont connectés par des faisceaux de tube horizontaux (non représentés). De la même manière, le radiateur à très basse température 17 comprend une première partie 1672B et une seconde partie 1673B. Cette première partie 1672B et cette seconde partie 1673B sont connectés par des faisceaux de tube horizontaux (non représentés). La première partie 1672A du radiateur à haute température 16 et la première partie 1672B du radiateur à très basse température 17 sont distantes. De plus la seconde partie 1673A du radiateur à haute température 16 et la seconde partie 1673B du radiateur à très basse température 17 sont également distantes. Le couplage entre le radiateur à haute température 16 et le radiateur à très basse température 17 est réalisé à l'aide d'un tube 1675 reliant la seconde partie 1673A du radiateur à haute température 16 et la seconde partie 1673B du radiateur à basse température 17. On notera également que la première partie 1672A du radiateur à haute température 16 est reliée au reste du circuit général de refroidissement 1 par la première entrée 161 et par la seconde entrée 162. La première partie 1672B est reliée au reste du circuit général de refroidissement 1 par la seconde entrée 172. La seconde partie 1673B du radiateur à très basse température 17 est reliée au reste du circuit général de refroidissement 1 par la première entrée 171.

Le circuit général de refroidissement 1 comprend également un circuit à basse température 20 illustré à la figure 1. Ce circuit comprend :
- une électronique de puissance 21 ;
- un ensemble d'échangeur 22 ;
- un radiateur basse température 23 comprenant une première entrée 231 et une seconde entrée 232 ;
- un thermostat à trois voies 24 ;
- une pompe 25 ;
- un ensemble de conduites comprenant une première conduite 261, une seconde conduite 262 et une troisième conduite 263.

Dans le circuit à basse température 20, le moteur électrique 5 est relié à la première entrée 231 du radiateur à basse température 23. Une électronique de puissance 21 et un ensemble d'échangeur 22 sont, ici, montés en parallèle du moteur électrique 5 entre un nœud A et un nœud B communs à l'électronique de puissance 21, au moteur électrique 5 et à l'ensemble d'échangeur 22. L'électronique de puissance comprend un onduleur et/ou un convertisseur DC/DC. L'ensemble d'échangeur 22 comprend un condensateur de climatiseur et/ou un refroidisseur d'air de suralimentation (RAS) et/ou un refroidisseur d'un système de recirculation des gaz d'échappement (EGR). En variante, en fonction du débit choisi du fluide caloporteur et de la température demandée, l'électronique de puissance 21, le moteur électrique 5 et l'ensemble d'échangeur 22 peuvent être disposés en série dans le circuit à basse température 20. La seconde entrée 232 du radiateur basse température 23 est reliée au thermostat à trois voies 24. Ce thermostat à trois voies 24 est, par exemple, un thermostat de type à cire à double effet. En dessous d'une température de consigne du fluide caloporteur, le thermostat à trois voies 24 est dans une position fermée et le fluide caloporteur est alors dérivé du radiateur basse température 23 via la première conduite 261 qui contourne ledit radiateur basse température 23 vers le moteur électrique 5. Au-dessus de cette température de consigne, le thermostat à trois voies 24 est dans une position ouverte dans laquelle le fluide caloporteur traverse le radiateur basse température 23. Le thermostat à trois voies 24 est également relié à la pompe 25. Cette pompe 25 permet la circulation du fluide caloporteur dans le circuit à basse température 20.

Enfin, le circuit général de refroidissement 1 comprend un circuit à très basse température 30 comportant :
- une pompe 31 ;
- un échangeur thermique liquide/réfrigérant 32 ou chiller ;
- une résistance électrique 33 ou CTP ;
- une conduite 34.

Le circuit à très basse température 30 est dédié à la gestion thermique de la batterie 7. La pompe 31 permet la circulation du fluide caloporteur dans la conduite 34. Cette pompe 31 est, ici, une pompe électrique. Le refroidisseur 32 est adapté pour refroidir la batterie. La résistance électrique 33 est adaptée pour chauffer l'eau de la batterie 7, par exemple en vue de préchauffer cette batterie 7. On notera que ce circuit à très basse température 30 ne comprend pas de radiateur d'eau en tant que tel.

Le circuit à haute température 10, le circuit à basse température 20 et le circuit à très basse température 30 sont, ici, interconnectés entre eux par un premier système de vannes pilotées 40, un second système de vannes pilotées 50 et un troisième système de vannes pilotées 60. Le circuit général de refroidissement 1 comprend ainsi un ensemble de conduites auxiliaires pour interconnecter lesdits systèmes de vannes pilotées 40, 50, 60. Cet ensemble de conduites auxiliaires comprend une première conduite auxiliaire 71, une seconde conduite auxiliaire 72, une troisième conduite auxiliaire 73 et une quatrième conduite auxiliaire 74. La première conduite auxiliaire 71 relie le premier système de vannes pilotées 40 au second système de vannes pilotées 50. La seconde conduite auxiliaire 72 relie le premier système de vannes pilotées 40 à la vanne 18 du circuit à haute température 10. La troisième conduite auxiliaire 73 relie le troisième système de vannes pilotées 60 à la seconde conduite auxiliaire 72. La quatrième conduite auxiliaire 74 relie le second système de vannes pilotées 50 au troisième système de vannes pilotées 60.

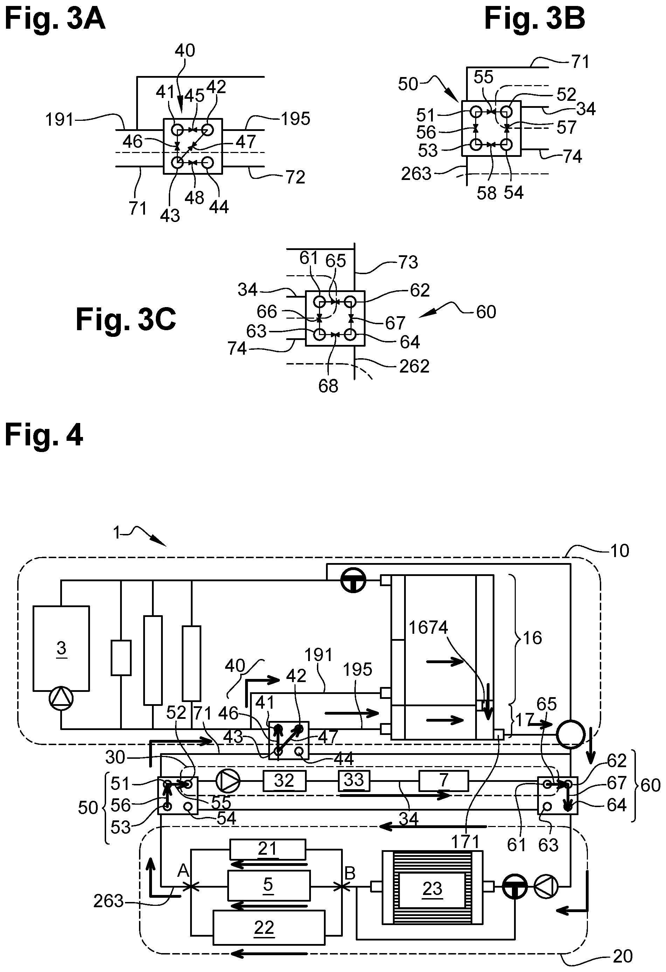

La figure 3A illustre le premier système de vannes pilotées 40 selon un premier type de système de vannes pilotées. Ce premier système 40 comprend une première entrée 41, une seconde entrée 42, une troisième entrée 43 et une quatrième entrée 44. La première entrée 41 est reliée à la conduite moteur amont 191. La seconde entrée 42 est reliée à la troisième conduite 195 du circuit à haute température 10. La troisième entrée 43 est reliée à la première conduite auxiliaire 71. La quatrième entrée 44 est reliée à la seconde conduite auxiliaire 72. Le premier système 40 comprend en outre une première vanne pilotée 45, une seconde vanne pilotée 46, une troisième vanne pilotée 47, une quatrième vanne pilotée 48. Chaque vanne pilotée 45, 46, 47, 48 relie deux entrées du système 40. Chaque vanne pilotée peut ainsi prendre une position ouverte dans laquelle il existe une communication fluidique entre deux entrées du système 40 et une position fermée dans laquelle il n'y a pas de communication fluidique entre les entrées. Ainsi, la première vanne pilotée 45 est adaptée pour relier la première entrée 41 à la seconde entrée 42 du premier système 40. La seconde vanne pilotée 46 est adaptée pour relier la première entrée 41 à la troisième entrée 43 du système 40. La troisième vanne pilotée 47 est adaptée pour relier le seconde entrée 42 à la troisième entrée 43 du système 40. La quatrième vanne pilotée 48 est adaptée pour relier la troisième entrée 43 à la quatrième entrée 44.

La figure 3B illustre le second système de vannes pilotées 50 selon un second type de système de vannes pilotées. Ce second système 50 comprend une première entrée 51, une seconde entrée 52, une troisième entrée 53 et une quatrième entrée 54. La première entrée 51 est reliée à la première conduite auxiliaire 71. La seconde entrée 52 est reliée à la conduite 34 du circuit à très basse température 30. La troisième entrée 53 est reliée à la troisième conduite 263 du circuit à basse température 20. La quatrième entrée 54 est reliée à la quatrième conduite auxiliaire 74. Le second système 50 comprend en outre une première vanne pilotée 55, une seconde vanne pilotée 56, une troisième vanne pilotée 57, une quatrième vanne pilotée 58. Chaque vanne pilotée 55, 56, 57, 58 relie deux entrées du système 50. Chaque vanne pilotée peut ainsi prendre une position ouverte dans laquelle il existe une communication fluidique entre deux entrées du système 50 et une position fermée dans laquelle il n'y a pas de communication fluidique entre les entrées. Ainsi, la première vanne pilotée 55 est adaptée pour relier la première entrée 51 à la seconde entrée 52 du premier système 50. La seconde vanne pilotée 56 est adaptée pour relier la première entrée 51 à la troisième entrée 53 du système 50. La troisième vanne pilotée 57 est adaptée pour relier le quatrième entrée 54 à la seconde entrée 52 du système 50. La quatrième vanne pilotée 58 est adaptée pour relier la troisième entrée 53 à la quatrième entrée 54.

La figure 3C illustre le troisième système de vannes pilotées 60. Ce troisième système 60 comprend une première entrée 61, une seconde entrée 62, une troisième entrée 63 et une quatrième entrée 64. La première entrée 61 est reliée à la conduite 34 du circuit à très basse température 30. La seconde entrée 62 est reliée à une troisième conduite auxiliaire 73. La troisième entrée 63 est reliée à la quatrième conduite auxiliaire 74. La quatrième entrée 64 est reliée à la seconde conduite 262 du circuit à basse température 20. Le troisième système 60 comprend en outre une première vanne pilotée 65, une seconde vanne pilotée 66, une troisième vanne pilotée 67, une quatrième vanne pilotée 68. Chaque vanne pilotée 65, 66, 67, 68 relie deux entrées du système 60. Chaque vanne pilotée peut ainsi prendre une position ouverte dans laquelle il existe une communication fluidique entre deux entrées du système 60 et une position fermée dans laquelle il n'y a pas de communication fluidique entre les entrées. Ainsi, la première vanne pilotée 65 est adaptée pour relier la première entrée 61 à la seconde entrée 62 du premier système 60. La seconde vanne pilotée 66 est adaptée pour relier la première entrée 61 à la troisième entrée 63 du système 60. La troisième vanne pilotée 67 est adaptée pour relier la quatrième entrée 64 à la seconde entrée 62 du système 60. La quatrième vanne pilotée 68 est adaptée pour relier la troisième entrée 63 à la quatrième entrée 64.

On notera ainsi que le premier système de vannes pilotées 40 appartient au premier type de système dans lequel la seconde entrée 42 est reliée à la troisième entrée 43 et dans lequel la seconde entrée 42 n'est pas reliée à la quatrième entrée 44. Le second système de vannes pilotées 50 et le troisième système de vannes pilotées 60 appartiennent au second type de système dans lequel la seconde entrée 52, 62 n'est pas reliée à la troisième entrée 53, 63 et dans lequel la seconde entrée 52, 62 est reliée à la quatrième entrée 54, 64.

Le premier système de vannes pilotées 40, le second système de vannes pilotées 50 et le troisième système de vannes pilotées 60 permettent des interconnexions entre le circuit à haute température 10, le circuit à basse température 20 et le circuit à très basse température 30. Ces interconnexions facilitent la gestion thermique des différentes sources chaudes (moteur thermique 3, moteur électrique 5, batterie 7) du véhicule automobile hybride dans ses différents modes de fonctionnement. Pour rappel, les différents modes de fonctionnement du véhicule automobile hybride sont :
- un premier mode de fonctionnement dit mode de recharge rapide ;
- un second mode de fonctionnement dit mode de recharge rapide de forte puissance ;
- un troisième mode de fonctionnement dit mode de recharge rapide avec échangeur thermique liquide/réfrigérant ;
- un quatrième mode de fonctionnement dit mode électrique pure ;
- un cinquième mode de fonctionnement dit mode électrique pure avec refroidisseur ;
- un sixième mode de fonctionnement dit mode hybride ;
- un septième mode de fonctionnement dit mode hybride avec échangeur thermique liquide/réfrigérant selon un premier type de fonctionnement ;
- un huitième mode de fonctionnement dit mode hybride avec refroidisseur selon un second type de fonctionnement ;
- un neuvième mode de fonctionnement dit mode thermique pure selon un premier type de fonctionnement ;
- un dixième mode de fonctionnement dit mode thermique pure selon un second type de fonctionnement.

La figure 4 est une vue schématique du circuit général de refroidissement de la figure 1 en fonctionnement selon un premier mode de fonctionnement du véhicule automobile hybride dit mode de recharge rapide. Dans ce mode de fonctionnement, le premier système de vannes pilotées 40, le second système de vannes pilotées 50, le troisième système de vannes pilotées 60 sont arrangés selon un premier arrangement. Dans ce premier arrangement :
- pour le premier système de vannes pilotées 40 : la première vanne pilotée 45 est fermée (voir figure 3A), la seconde vanne pilotée 46 est ouverte mettant en relation fluidique la troisième entrée 43 avec la première entrée 41, la troisième vanne pilotée 47 est ouverte mettant en relation fluidique la troisième entrée 43 avec la seconde entrée 42, la quatrième vanne pilotée 48 est fermée (voir figure 3A);
- pour le second système de vannes pilotées 50 : la première vanne pilotée 55 est ouverte mettant en relation fluidique la première entrée 51 avec la seconde entrée 52, la seconde vanne pilotée 56 est ouverte mettant en relation fluidique la troisième entrée 53 avec la première entrée 51, la troisième vanne pilotée 57 est fermée (voir figure 3B), la quatrième vanne pilotée 58 est fermée (voir figure 3B).
- pour le troisième système de vannes pilotées 60 : la première vanne pilotée 65 est ouverte mettant en relation fluidique la première entrée 61 avec la seconde entrée 62, la seconde vanne pilotée 66 (voir figure 3C) est fermée, la troisième vanne pilotée 67 est ouverte mettant en relation fluidique la seconde entrée 62 avec la quatrième entrée 64, la quatrième vanne pilotée 68 (voir figure 3C) est fermée.

Dans ce premier mode de fonctionnement du véhicule automobile hybride, le fluide caloporteur passe par la boucle de refroidissement comprenant le second système de vannes pilotées 50, la première conduite auxiliaire 71, le premier système de vannes pilotées 40, la conduite moteur amont 191, le radiateur à haute température 16. En parallèle, une partie du fluide caloporteur est déviée par le premier système de vannes pilotées 40 vers le radiateur à très basse température 17 via la troisième conduite 195 du circuit à haute température 10. On notera que le fluide caloporteur entrant dans le radiateur à haute température 16 est réacheminé vers le radiateur à très basse température 17 par le bouchon 1674 percé. Ce bouchon 1674 permet ainsi de créer un passage entre les boîtes à eau du radiateur à haute température 16 et du radiateur à très basse température 17. C'est également le cas pour les second, quatrième, cinquième, septième et neuvième modes de fonctionnement. Ce bouchon permet de réduire le passage du fluide caloporteur entre deux états de température du fluide caloporteur différents (d'une part un état de température du fluide caloporteur dans le radiateur haute température 16 et d'autre part un état de température du fluide caloporteur dans le radiateur à très basse température 17) dans les sixième, huitième et dixième modes de fonctionnement. L'ensemble du fluide caloporteur ressort par l'entrée 171 du radiateur à très basse température 17 pour rejoindre le troisième système de vannes pilotées 60. Ce troisième système de vannes pilotées 60 reçoit également une partie du fluide caloporteur déviée par le second système de vannes pilotées 50 via la conduite 34 du circuit à très basse température 30. Cette partie du fluide caloporteur vient alors refroidir la batterie 7. Du troisième système de vannes pilotées 60, le fluide caloporteur est envoyé vers le radiateur basse température 23 puis il emprunte le réseau de conduites entre le nœud B et le nœud A (électronique de puissance 21, moteur électrique 5, ensemble d'échangeur 22) avant de rejoindre le second système de vannes pilotées 50 via la troisième conduite 263 du circuit à basse température 20.

Ainsi, dans ce premier mode de fonctionnement, la batterie 7 est refroidie par le radiateur à haute température 16, le radiateur à très basse température 17, le radiateur basse température 23, le même fluide caloporteur passant par ces trois radiateurs 16, 17, 23. En outre, l'électronique de puissance 21 est également refroidie par les trois radiateurs 16, 17, 23. Ce premier mode de fonctionnement permet alors de réaliser un refroidissement optimal de la batterie 7 et de l'électronique de puissance 21.

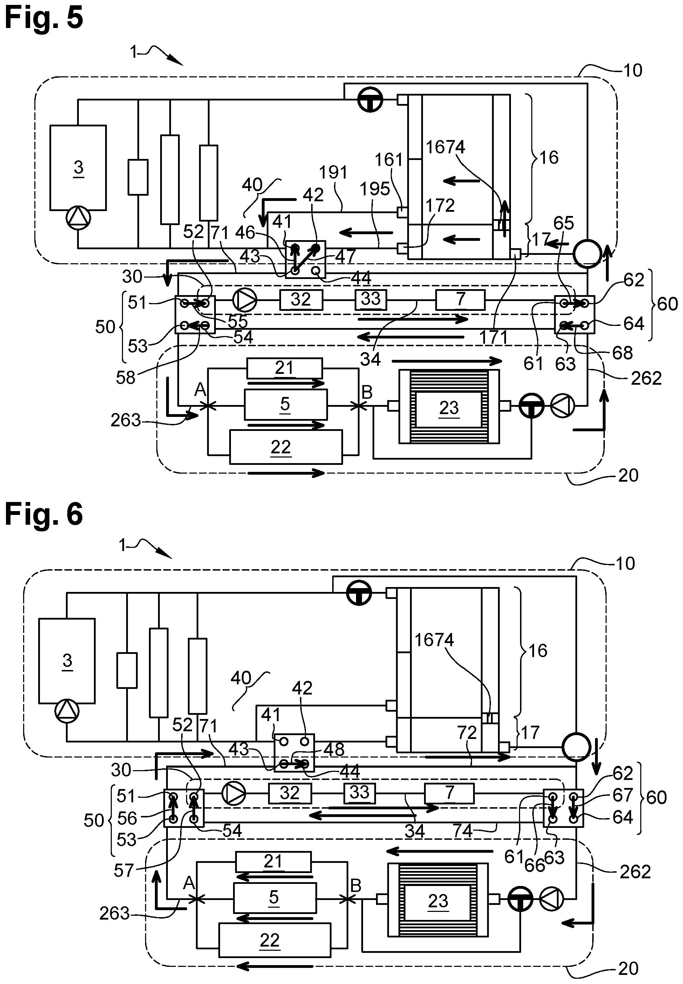

La figure 5 est une vue schématique du circuit général de refroidissement de la figure 1 en fonctionnement selon un second mode de fonctionnement du véhicule automobile hybride dit mode de recharge rapide de forte puissance. Dans ce mode de fonctionnement, le premier système de vannes pilotées 40, le second système de vannes pilotées 50, le troisième système de vannes pilotées 60 sont arrangés selon un second arrangement. Dans ce second arrangement :
- pour le premier système de vannes pilotées 40 : la première vanne pilotée 45 est fermée (voir figure 3A), la seconde vanne pilotée 46 est ouverte mettant en relation fluidique la troisième entrée 43 avec la première entrée 41, la troisième vanne pilotée 47 est ouverte mettant en relation fluidique la troisième entrée 43 avec la seconde entrée 42, la quatrième vanne pilotée 48 est fermée (voir figure 3A);
- pour le second système de vannes pilotées 50 : la première vanne pilotée 55 est ouverte mettant en relation fluidique la première entrée 51 avec la seconde entrée 52, la seconde vanne pilotée 56 est fermée (voir figure 3B), la troisième vanne pilotée 57 est fermée (voir figure 3B), la quatrième vanne pilotée 58 est ouverte mettant en relation fluidique la troisième entrée 53 avec la quatrième entrée 54.
- pour le troisième système de vannes pilotées 60 : la première vanne pilotée 65 est ouverte mettant en relation fluidique la première entrée 61 avec la seconde entrée 62, la seconde vanne pilotée 66 est fermée (voir figure 3C), la troisième vanne pilotée 67 est fermée (voir figure 3C), la quatrième vanne pilotée 68 est ouverte mettant en relation fluidique la troisième entrée 63 avec la quatrième entrée 64.

Dans ce second mode de fonctionnement du véhicule automobile hybride, il existe deux boucles de refroidissement indépendantes. Une première boucle de refroidissement comprend le premier système de vannes pilotées 40, la première conduite auxiliaire 71, le second système de vannes pilotées 50, la conduite 34 du circuit à très basse température 30, le troisième système de vannes pilotées 60, la première entrée 171 du radiateur à très basse température 17. Le fluide caloporteur est alors réparti entre le radiateur à très basse température 17 et le radiateur à haute température 16 par l'intermédiaire du bouchon 1674 percé. Dans le premier cas, le fluide caloporteur sort du radiateur à très haute température 16 par son entrée 161 et il rejoint le premier système de vannes pilotées 40 via la conduite moteur amont 191. Dans le second cas, le fluide caloporteur sort du radiateur à très basse température 17 par sa seconde entrée 172 et il rejoint le premier système de vannes pilotées 40 via la troisième conduite 195 du circuit à haute température 10. Cette première boucle de refroidissement permet de refroidir efficacement la batterie 7 par l'utilisation combinée du radiateur à haute température 16 et du radiateur à très basse température 17. Une seconde boucle de refroidissement comprend le second système de vannes pilotées 50, la troisième conduite 263 du circuit à basse température 20, le réseau de conduites entre le nœud A et le nœud B (électronique de puissance 21, moteur électrique 5, ensemble d'échangeur 22), le radiateur basse température 23, la troisième conduite 263 du circuit à basse température 20, le troisième système de vannes pilotées 60. La seconde boucle de refroidissement permet ainsi de refroidir efficacement l'électronique de puissance 21. On notera que le fluide caloporteur à une température plus élevée dans la deuxième boucle de refroidissement (pour refroidir l'électronique de puissance 21), de l'ordre de 30°C à 60°C, que dans la première boucle de refroidissement (pour refroidir la batterie). En effet, dans cette première boucle de refroidissement, le fluide caloporteur bénéficie d'un refroidissement combiné par le radiateur à haute température 16 et le radiateur à très basse température 17. Dans la seconde boucle de refroidissement seul le radiateur à basse température 23 est sollicité.

La figure 6 est une vue schématique du circuit général de refroidissement de la figure 1 en fonctionnement selon un troisième mode de fonctionnement du véhicule automobile hybride dit mode de recharge rapide avec échangeur liquide/réfrigérant. Dans ce mode de fonctionnement, le premier système de vannes pilotées 40, le second système de vannes pilotées 50, le troisième système de vannes pilotées 60 sont arrangés selon un troisième arrangement. Dans ce troisième arrangement :
- pour le premier système de vannes pilotées 40 : la première vanne pilotée 45 est fermée (voir figure 3A), la seconde vanne pilotée 46 est fermée (voir figure 3A), la troisième vanne pilotée 47 est fermée (voir figure 3A), la quatrième vanne pilotée 48 est ouverte mettant en relation fluidique la troisième entrée 43 avec la quatrième entrée 44 ;
- pour le second système de vannes pilotées 50 : la première vanne pilotée 55 est fermée (voir figure 3B), la seconde vanne pilotée 56 est ouverte mettant en relation fluidique la première entrée 51 avec la troisième entrée 53, la troisième vanne pilotée 57 est ouverte mettant en relation fluidique la quatrième entrée 54 avec la troisième entrée, la quatrième vanne pilotée 58 est fermée (voir figure 3B) ;
- pour le troisième système de vannes pilotées 60 : la première vanne pilotée 65 est fermée (voir figure 3C), la seconde vanne pilotée 66 est ouverte mettant en relation fluidique la première entrée 61 et la troisième entrée 63, la troisième vanne pilotée 67 est ouverte mettant en relation fluidique la seconde entrée 62 avec la quatrième entrée 64, la quatrième vanne pilotée 68 est fermée (voir figure 3C).

Dans ce troisième mode de fonctionnement du véhicule automobile hybride, il existe deux boucles de refroidissement indépendantes. Une première boucle de refroidissement comprend le premier système de vannes pilotées 40, la seconde conduite auxiliaire 72, le troisième système de vannes pilotées 60, la seconde conduite 262 du circuit à basse température 20, le radiateur basse température 23, le réseau de conduites entre le nœud B et le nœud A (électronique de puissance 21, moteur électrique 5, ensemble d'échangeur 22), la troisième conduite 263 du circuit à basse température 20, le second système de vannes pilotée 50, la première conduite auxiliaire 71. Cette première boucle de refroidissement permet de refroidir efficacement l'électronique de puissance 21 par le radiateur basse température 23. La seconde boucle de refroidissement comprend le second système de vannes pilotées 50, la conduite 34 du circuit à très basse température 30, l'échangeur thermique liquide/réfrigérant 32 ou « chiller », la batterie 7, le troisième système de vannes pilotées 60, la quatrième conduite auxiliaire 74. La seconde boucle de refroidissement permet de refroidir la batterie 7 par l'échangeur thermique liquide/réfrigérant 32. L'utilisation de l'échangeur thermique liquide/réfrigérant 32 est, ici, indispensable notamment lorsque la température ambiante est élevée et la température du fluide caloporteur est supérieure à ladite température ambiante.

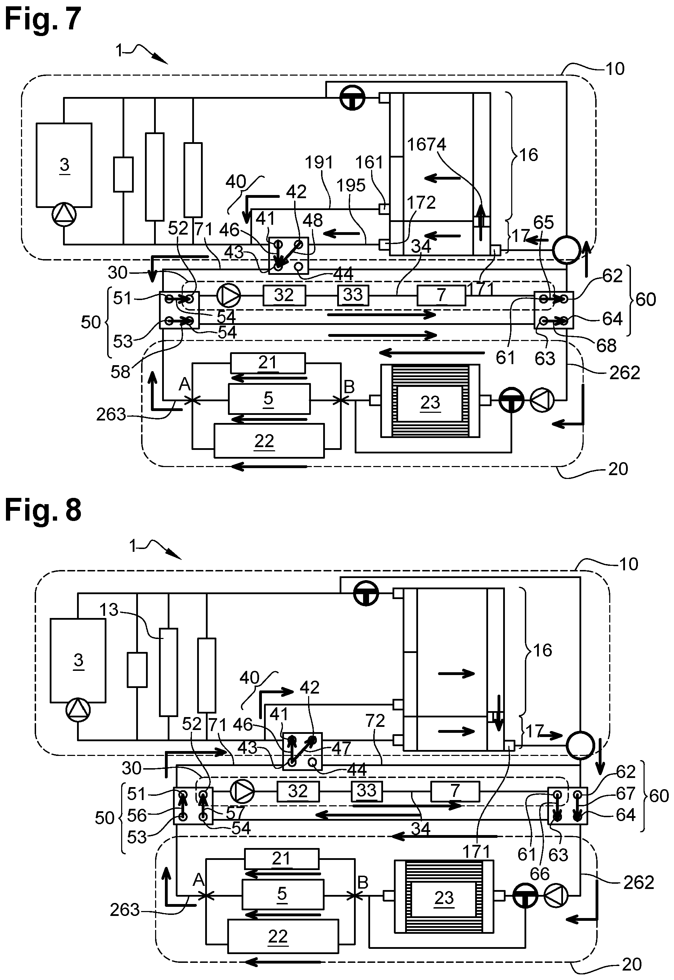

La figure 7 est une vue schématique du circuit général de refroidissement de la figure 1 en fonctionnement selon un quatrième mode de fonctionnement du véhicule automobile hybride dit mode électrique pure. Dans ce mode de fonctionnement, le premier système de vannes pilotées 40, le second système de vannes pilotées 50, le troisième système de vannes pilotées 60 sont arrangés selon un quatrième arrangement. Dans ce quatrième arrangement :
- pour le premier système de vannes pilotées 40 : la première vanne pilotée 45 est fermée (voir figure 3A), la seconde vanne pilotée 46 est ouverte mettant en relation fluidique la troisième entrée 43 avec la première entrée 41, la troisième vanne pilotée 47 est ouverte mettant en relation fluidique la troisième entrée 43 avec la seconde entrée 42, la quatrième vanne pilotée 48 est fermée (voir figure 3A);
- pour le second système de vannes pilotées 50 : la première vanne pilotée 55 est ouverte mettant en relation fluidique la première entrée 51 avec la seconde entrée 52, la seconde vanne pilotée 56 est fermée (voir figure 3B), la troisième vanne pilotée 57 est fermée (voir figure 3B), la quatrième vanne pilotée 58 est ouverte mettant en relation fluidique la troisième entrée 53 avec la quatrième entrée 54 ;
- pour le troisième système de vannes pilotées 60 : la première vanne pilotée 65 est ouverte mettant en relation fluidique la première entrée 61 avec la seconde entrée 62, la seconde vanne pilotée 66 est fermée (voir figure 3C), la troisième vanne pilotée 67 est fermée (voir figure 3C), la quatrième vanne pilotée 68 est ouverte mettant en relation fluidique la troisième entrée 63 avec la quatrième entrée 64.

Dans ce second mode de fonctionnement du véhicule automobile hybride, il existe deux boucles de refroidissement indépendantes. Une première boucle de refroidissement comprend le premier système de vannes pilotées 40, la première conduite auxiliaire 71, le second système de vannes pilotées 50, la conduite 34 du circuit à très basse température 30, le troisième système de vannes pilotées 60, la première entrée 171 du radiateur à très basse température 17. Le fluide caloporteur est alors réparti entre le radiateur à très basse température 17 et le radiateur à haute température 16 par l'intermédiaire du bouchon 1674 percé. Dans le premier cas, le fluide caloporteur sort du radiateur à très haute température 16 par son entrée 161 et il rejoint le premier système de vannes pilotées 40 via la conduite moteur amont 191. Dans le second cas, le fluide caloporteur sort du radiateur à très basse température 17 par sa seconde entrée 172 et il rejoint le premier système de vannes pilotées 40 via la troisième conduite 195 du circuit à haute température 10. Cette première boucle de refroidissement permet de refroidir efficacement la batterie 7 par l'utilisation combinée du radiateur à haute température 16 et du radiateur à très basse température 17. Une seconde boucle de refroidissement comprend le second système de vannes pilotées 50, la troisième conduite 263 du circuit à basse température 20, le réseau de conduites entre le nœud A et le nœud B (électronique de puissance 21, moteur électrique 5, ensemble d'échangeur 22), le radiateur basse température 23, la seconde conduite 262 du circuit à basse température 20, le troisième système de vannes pilotées 60. La seconde boucle de refroidissement permet ainsi de refroidir efficacement le moteur électrique 5. Dans cette première boucle de refroidissement, le fluide caloporteur bénéficie d'un refroidissement combiné par le radiateur à haute température 16 et le radiateur à très basse température 17. On retarde ainsi l'utilisation de l'échangeur thermique liquide/réfrigérant 32 pour refroidir la batterie 7. Dans la seconde boucle de refroidissement seul le radiateur à basse température 23 est sollicité.

La figure 8 est une vue schématique du circuit général de refroidissement de la figure 1 en fonctionnement selon un cinquième mode de fonctionnement du véhicule automobile hybride dit mode électrique pure avec refroidisseur. Dans ce mode de fonctionnement, le premier système de vannes pilotées 40, le second système de vannes pilotées 50, le troisième système de vannes pilotées 60 sont arrangés selon un cinquième arrangement. Dans ce cinquième arrangement :
- pour le premier système de vannes pilotées 40 : la première vanne pilotée 45 est fermée (voir figure 3A), la seconde vanne pilotée 46 est ouverte mettant en relation fluidique la troisième entrée 43 avec la première entrée 41, la troisième vanne pilotée 47 est ouverte mettant en relation fluidique la troisième entrée 43 avec la seconde entrée 42, la quatrième vanne pilotée 48 est fermée (voir figure 3A) ;
- pour le second système de vannes pilotées 50 : la première vanne pilotée 55 est fermée (voir figure 3B), la seconde vanne pilotée 56 est ouverte mettant en relation la troisième entrée 53 avec la première entrée 51, la troisième vanne pilotée 57 est ouverte mettant en relation la quatrième entrée 54 avec la seconde entrée 52, la quatrième vanne pilotée 58 est fermée (voir figure 3B) ;
- pour le troisième système de vannes pilotées 60 : la première vanne pilotée 65 est fermée (voir figure 3C), la seconde vanne pilotée 66 est ouverte mettant en relation la première entrée 61 avec la troisième entrée 63, la troisième vanne pilotée 67 est ouverte mettant en relation la seconde entrée 62 avec la quatrième entrée 64, la quatrième vanne pilotée 68 est fermée (voir figure 3C).

Dans ce cinquième mode de fonctionnement du véhicule automobile hybride, il existe deux boucles de refroidissement indépendantes. La première boucle de refroidissement passe par le premier système de vannes pilotées 40, le radiateur à haute température 16, le radiateur à très basse température 17, le troisième système de vannes pilotées 60, le radiateur basse température 23, le moteur électrique 5, le second système de vannes pilotées 50. Le moteur électrique 5 est alors refroidi de manière optimale par le radiateur à haute température 16, le radiateur à très basse température 17 et le radiateur basse température 23. La seconde boucle de refroidissement comprend le second système de vannes pilotées 50, l'échangeur liquide/réfrigérant 32, la batterie 7, le troisième système de vannes pilotées 60. L'utilisation du refroidisseur 32 est, ici, indispensable notamment lorsque la température ambiante est élevée et la température du fluide caloporteur destiné à refroidir la batterie 7 est supérieure à ladite température ambiante.

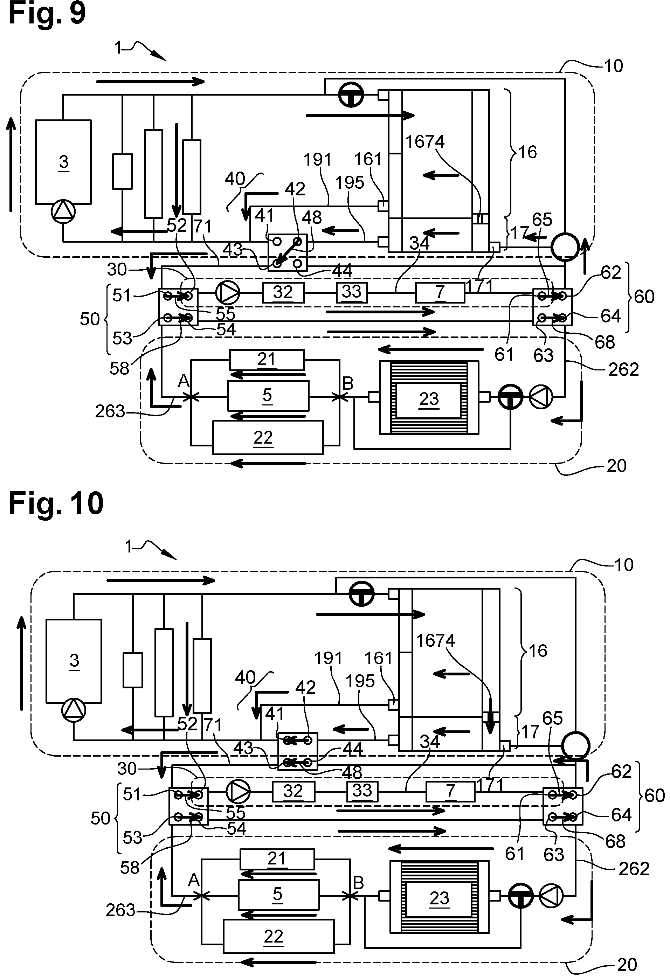

La figure 9 est une vue schématique du circuit général de refroidissement de la figure 1 en fonctionnement selon un sixième mode de fonctionnement du véhicule automobile hybride dit mode hybride. Dans ce mode de fonctionnement, le premier système de vannes pilotées 40, le second système de vannes pilotées 50, le troisième système de vannes pilotées 60 sont arrangés selon un sixième arrangement. Dans ce sixième arrangement :
- pour le premier système de vannes pilotées 40 : seule la troisième vanne pilotée 47 est ouverte ;
- pour le second système de vannes pilotées 50 : la première vanne pilotée 55 et la quatrième vanne pilotée 58 sont ouvertes ;
- pour le troisième système de vannes pilotées 60 : la première vanne pilotée 65 et la quatrième vanne pilotée 68 sont ouvertes.

Dans ce sixième mode de fonctionnement du véhicule automobile hybride, il existe trois boucles de refroidissement indépendantes. La première boucle de refroidissement passe par le premier système de vannes pilotées 40, le moteur thermique 3, le radiateur de chauffage de l'habitacle 13, le radiateur à haute température 16. La seconde boucle de refroidissement comprend le premier système de vannes pilotées 40, le radiateur à très basse température 17, le second système de vannes pilotées 50, la batterie 7, le troisième système de vannes pilotées 60. La troisième boucle de refroidissement comprend le second système de vannes pilotées 50, le troisième système de vannes pilotées 60, le radiateur basse température 23, le moteur électrique 5. On notera que dans ce sixième mode de fonctionnement, la première boucle de refroidissement pour refroidir le moteur thermique a une seul point d'échange avec la seconde boucle de refroidissement pour refroidir la batterie 7 via le bouchon percé 1674. Ce point d'échange unique entre la première boucle de refroidissement et la seconde boucle de refroidissement ne permet qu'un équilibrage des pressions entre ces deux boucles. Ceci est dû au volume de la seconde boucle de refroidissement et au liquide caloporteur à l'intérieur de cette seconde boucle qui reste incompressible. En outre, le fait d'utiliser un bouchon percé permet ici, du fait de l'équilibrage des pressions, de réduire le mélange entre les deux liquides caloporteurs (le liquide caloporteur de le première boucle de refroidissement pour refroidir le moteur et le liquide caloporteur de la seconde boucle de refroidissement pour refroidir la batterie) présentant des températures très différentes. Les huitième et dixième modes de fonctionnement utilisent également ce principe.

La figure 10 est une vue schématique du circuit général de refroidissement de la figure 1 en fonctionnement selon un septième mode de fonctionnement du véhicule automobile hybride dit mode hybride avec échangeur liquide/réfrigérant selon un premier type de fonctionnement. Dans ce mode de fonctionnement, le premier système de vannes pilotées 40, le second système de vannes pilotées 50, le troisième système de vannes pilotées 60 sont arrangés selon un septième arrangement. Ce septième arrangement se distingue du sixième arrangement de la figure 9 en ce que, pour le premier système de vannes pilotées 40, la première vanne pilotée 45 et la quatrième vanne pilotée 48 sont fermées. Le second système de vannes pilotées 50 et le troisième système de vannes pilotées 60 sont dans la même configuration que dans le mode de réalisation de la figure 9. Dans ce septième mode de fonctionnement, la batterie 7 est refroidie par l'échangeur thermique liquide/réfrigérant 32. Le radiateur à très basse température 17 n'est plus utilisé pour le refroidissement de ladite batterie 7. Ce radiateur à très basse température 17 est utilisé pour le refroidissement du moteur thermique 3.

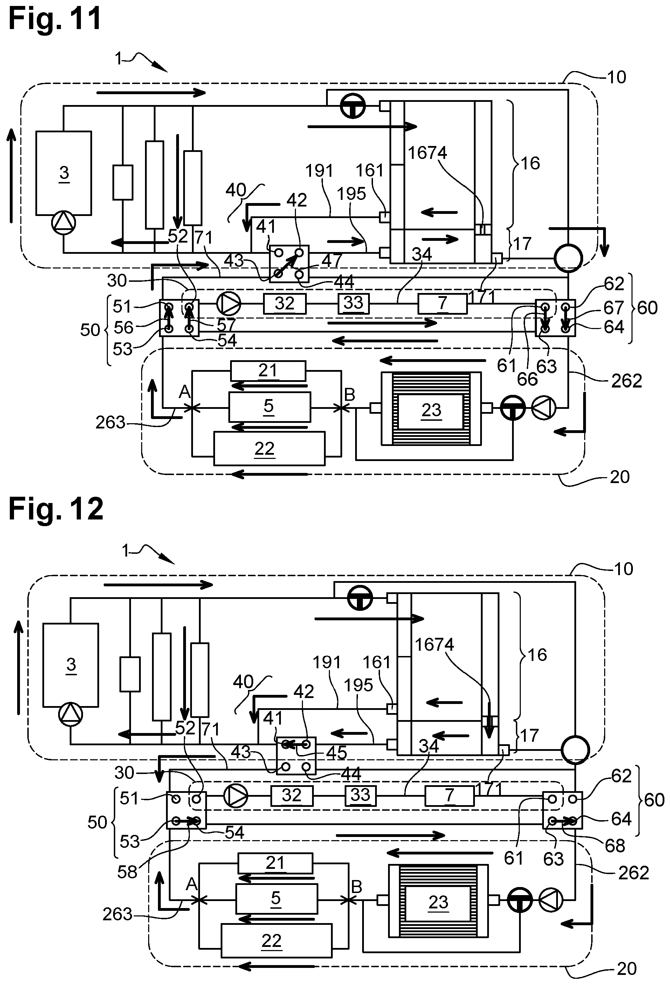

La figure 11 est une vue schématique du circuit général de refroidissement de la figure 1 en fonctionnement selon un huitième mode de fonctionnement du véhicule automobile hybride dit mode hybride avec refroidisseur selon un second type de fonctionnement. Dans ce mode de fonctionnement, le premier système de vannes pilotées 40, le second système de vannes pilotées 50, le troisième système de vannes pilotées 60 sont arrangés selon un huitième arrangement. Dans ce huitième arrangement :
- pour le premier système de vannes pilotées 40 : seule la troisième vanne pilotée 47 est ouverte ;
- pour le second système de vannes pilotées 50 : la seconde vanne pilotée 56 et la troisième vanne pilotée 57 sont ouvertes ;
- pour le troisième système de vannes pilotées 60 : la seconde vanne pilotée 66 et la troisième vanne pilotée 67 sont ouvertes.

Dans ce huitième mode de fonctionnement du véhicule automobile hybride, il existe trois boucles de refroidissement indépendantes :
- une boucle de refroidissement pour le moteur thermique 3 comprenant le radiateur à haute température 16 ;
- une boucle de refroidissement pour la batterie 7 comprenant l'échangeur thermique liquide/réfrigérant 32 ;
- une boucle de refroidissement pour le moteur électrique 5 comprenant le radiateur à basse température 23 et le radiateur à très basse température 17.

On notera que dans ce huitième mode de fonctionnement, le bouchon 1674 est le seul point d'échange entre la boucle de refroidissement pour refroidir le moteur thermique 3 et la boucle de refroidissement pour refroidir le moteur électrique 5. Le bouchon percé crée l'équilibre de pression entre les deux boucles de refroidissement tout en gardant indépendantes la boucle de refroidissement du moteur thermique 3 et la boucle de refroidissement du moteur électrique 5.

La figure 12 est une vue schématique du circuit général de refroidissement de la figure 1 en fonctionnement selon un neuvième mode de fonctionnement du véhicule automobile hybride dit mode thermique pure selon un premier type de fonctionnement. Dans ce mode de fonctionnement, le premier système de vannes pilotées 40, le second système de vannes pilotées 50, le troisième système de vannes pilotées 60 sont arrangés selon un neuvième arrangement. Dans ce neuvième arrangement :
- pour le premier système de vannes pilotées 40 : seule la première vanne pilotée 45 est ouverte ;
- pour le second système de vannes pilotées 50 : seule la quatrième vanne pilotée 58 est ouverte ;
- pour le troisième système de vannes pilotées 60 : seule la quatrième vanne pilotée 68 est ouverte.

Dans ce neuvième mode de fonctionnement du véhicule automobile hybride, il existe deux boucles de refroidissement indépendantes :
- une boucle de refroidissement pour le moteur thermique 3 comprenant le radiateur à haute température 16 et le radiateur à très basse température 17. Le bouchon 1674 est ouvert et permet une communication fluidique entre lesdits deux radiateurs 16 et 17 ;
- une boucle de refroidissement pour refroidir l'ensemble d'échangeur 22 (RAS, EGR) comprenant le radiateur à basse température 23.

La batterie 7 n'est pas ici refroidie par un des radiateurs et/ou l'échangeur thermique liquide/réfrigérant.

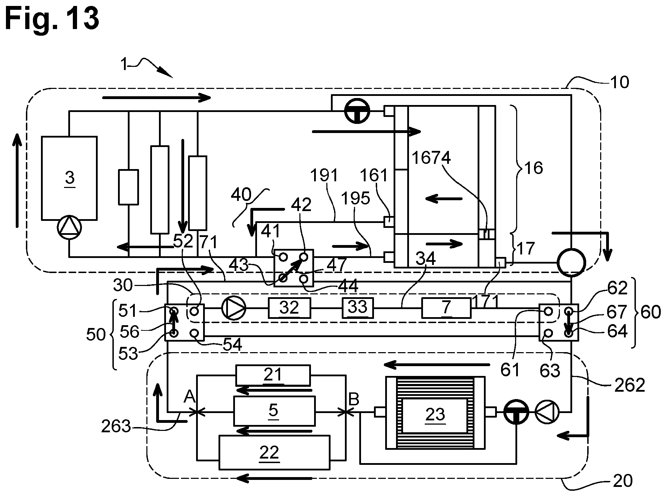

La figure 13 est une vue schématique du circuit général de refroidissement de la figure 1 en fonctionnement selon un dixième mode de fonctionnement du véhicule automobile hybride dit mode thermique pure selon un second type de fonctionnement. Dans ce mode de fonctionnement, le premier système de vannes pilotées 40, le second système de vannes pilotées 50, le troisième système de vannes pilotées 60 sont arrangés selon un dixième arrangement. Dans ce dixième arrangement :
- pour le premier système de vannes pilotées 40 : seule la troisième vanne pilotée 47 est ouverte ;
- pour le second système de vannes pilotées 50 : seule la seconde vanne pilotée 56 est ouverte ;
- pour le troisième système de vannes pilotées 60 : seule la troisième vanne pilotée 67 est ouverte.

Dans ce dixième mode de fonctionnement du véhicule automobile hybride, il existe deux boucles de refroidissement indépendantes :
- une boucle de refroidissement pour le moteur thermique 3 comprenant uniquement le radiateur à haute température 16 ;
- une boucle de refroidissement pour refroidir l'ensemble d'échangeur 22 (RAS, EGR) comprenant le radiateur à basse température 23 et le radiateur à très basse température 17.

On notera que le bouchon 1674 est le seul point d'échange entre la boucle de refroidissement pour le moteur thermique 3 et la boucle de refroidissement pour refroidir l'ensemble d'échangeur 22, de sorte qu'il se crée un équilibre de pression entre les deux boucles de refroidissement. Les deux boucles de refroidissement fonctionnent alors de manière indépendante l'une par rapport à l'autre. On notera également que la batterie 7 n'est pas ici refroidie par un des radiateurs et/ou l'échangeur thermique liquide/réfrigérant.

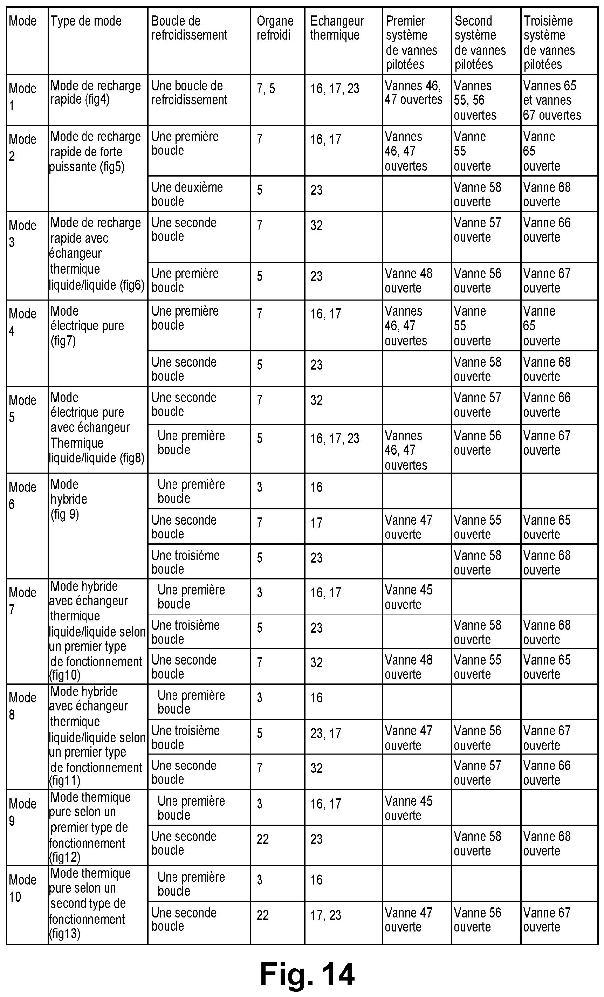

Le tableau de la figure 14 résume les différents modes de fonctionnement du véhicule automobile hybride tels que décrits aux figures 4 à 13.

Les modes de réalisations illustrés aux figures 4 à 13 permettent ainsi d'avoir toutes les configurations d'un circuit de refroidissement performant afin de garantir un fonctionnement optimisé du véhicule automobile hybride.

Grâce à l'invention, il est possible d'obtenir :
- trois boucles de refroidissement indépendantes (modes de réalisation 6, 7, 8 ) à trois niveaux de température différents d'un système de refroidissement conventionnel ;
- par rapport à un système de refroidissement conventionnel où chaque boucle n'utilise qu'un seul radiateur et où chaque radiateur doit être dimensionné dans des conditions sévères, l'invention propose de combiner l'effet refroidissant de plusieurs radiateurs en vue de refroidir un même organe du véhicule automobile hybride. **Il** n'est plus nécessaire ainsi de surdimensionner un radiateur particulier pour satisfaire à une demande de refroidissement d'un organe donné;
- l'invention permet de maîtriser le dimensionnement des radiateurs, notamment ceux situés à l'avant du véhicule, tout en optimisant leur capacité général de refroidissement. Ainsi, pour un même niveau de dimensionnement, les radiateurs peuvent s'adapter à des véhicules automobiles hybrides de puissance plus importante, car ils peuvent combiner entre eux leur capacité de refroidissement.

## Revendications

1. Dispositif de gestion thermique pour un véhicule automobile hybride, ledit véhicule automobile hybride comprenant un moteur thermique (3), un moteur électrique (5), une batterie (7) pour l'alimentation dudit moteur électrique (5), ledit dispositif de gestion thermique comportant :
- un circuit général de refroidissement (1) adapté pour faire circuler un fluide caloporteur ;
- des échangeurs thermiques (16,17,23,32) pour le refroidissement du fluide caloporteur ;
- des moyens d'interconnexion (40, 50, 60) entre les différents échangeurs thermiques (16, 17, 23, 32) du fluide caloporteur ;
les moyens d'interconnexion (40, 50, 60) comprennent au moins trois systèmes de vannes pilotées (40, 50, 60) distincts, chaque système de vannes pilotées (40, 50, 60) comportant au moins quatre voies (41, 42, 43, 44; 51, 52, 53, 54 ; 61, 62, 63, 64) pour interconnecter tout ou partie des différents échangeurs thermiques (16,17,23,32) en vue d'optimiser le refroidissement du moteur thermique (3) et/ou de la batterie (7) et/ou du moteur électrique (5) par ledit fluide caloporteur circulant dans au moins une boucle de refroidissement, les échangeurs thermiques étant choisis parmi une liste d'échangeurs thermiques comprenant :
- un radiateur à haute température (16) ;
- un radiateur à basse température (23) ;
- un radiateur à très basse température (17) ;
- un échangeur thermique liquide/réfrigérant (32),
**caractérisé en ce que** dans lequel le radiateur à haute température (16) et le radiateur à très basse température (17) sont couplés fluidiquement.

2. Dispositif de gestion thermique selon la revendication précédente, dans lequel les systèmes de vannes pilotées (40, 50, 60) sont arrangés de sorte que le radiateur à haute température (16) et/ou le radiateur à basse température (23) et/ou le radiateur à très basse température (17) et/ou l'échangeur thermique liquide/réfrigérant (32) refroidissent le moteur électrique (5).

3. Dispositif de gestion thermique selon la revendication 1 ou 2, dans lequel les systèmes de vannes pilotées (40, 50, 60) sont arrangés de sorte que le radiateur à haute température (16) et/ou le radiateur à très basse température (17) refroidit le moteur thermique (3).

4. Dispositif de gestion thermique selon l'une quelconque des revendications 2 ou 3, dans lequel les systèmes de vannes pilotées (40, 50, 60) sont arrangés de sorte que le radiateur à haute température (16) et/ou le radiateur à basse température (23) et/ou le radiateur à très basse température (17) et/ou l'échangeur thermique liquide/réfrigérant (32) refroidissent la batterie (7).

5. Dispositif de gestion thermique selon l'une quelconque des revendications 1 à 54 dans lequel les systèmes de vannes pilotées (40, 50, 60) sont arrangés pour former une seule boucle de refroidissement.

6. Dispositif de gestion thermique selon l'une quelconque des revendications 1 à 4, dans lequel les systèmes de vannes pilotées (40, 50, 60) sont arrangés pour former deux boucles de refroidissement.

7. Dispositif de gestion thermique selon l'une quelconque des revendications 1 à 4, dans lequel les systèmes de vannes pilotées (40, 50, 60) sont arrangés pour former trois boucles de refroidissement.

8. Véhicule automobile hybride comprenant un dispositif de gestion thermique selon l'une quelconque des revendications 1 à 7.

## Patentansprüche

1. Wärmemanagementvorrichtung für ein Hybridkraftfahrzeug, wobei das Hybridkraftfahrzeug einen Verbrennungsmotor (3), einen Elektromotor (5), eine Batterie (7) zur Versorgung des Elektromotors (5) beinhaltet, wobei die Wärmemanagementvorrichtung Folgendes umfasst:
- einen Hauptkühlkreislauf (1), der dazu angepasst ist, ein Wärmeträgerfluid zirkulieren zu lassen;
- Wärmetauscher (16, 17, 23, 32) zur Kühlung des Wärmeträgerfluids;
- Verbindungsmittel (40, 50, 60) zwischen den unterschiedlichen Wärmetauschern (16, 17, 23, 32) des Wärmeträgerfluids;
die Verbindungsmittel (40, 50, 60) beinhalten mindestens drei separate Systeme mit gesteuerten Ventilen (40, 50, 60), wobei jedes System mit gesteuerten Ventilen (40, 50, 60) mindestens vier Wege (41, 42, 43, 44; 51, 52, 53, 54; 61, 62, 63, 64) zum Verbinden aller oder eines Teils der unterschiedlichen Wärmetauscher (16, 17, 23, 32) umfasst, um die Kühlung des Verbrennungsmotors (3) und/oder der Batterie (7) und/oder des Elektromotors (5) durch das Wärmeträgerfluid, das in mindestens einer Kühlschleife zirkuliert, zu optimieren, wobei die Wärmetauscher aus einer Liste von Wärmetauschern ausgewählt sind, die Folgendes beinhaltet:
- einen Hochtemperaturkühler (16);
- einen Niedertemperaturkühler (23);
- einen Kühler für sehr niedrige Temperaturen (17);
- einen Flüssigkeit-Kältemittel-Wärmetauscher (32),
**dadurch gekennzeichnet, dass** wobei der Hochtemperaturkühler (16) und der Kühler für sehr niedrige Temperaturen (17) fluidisch gekoppelt sind.

2. Wärmemanagementvorrichtung nach dem vorhergehenden Anspruch, wobei die Systeme mit gesteuerten Ventilen (40, 50, 60) so eingerichtet sind, dass der Hochtemperaturkühler (16) und/oder der Niedertemperaturkühler (23) und/oder der Kühler für sehr niedrige Temperaturen (17) und/oder der Flüssigkeit-Kältemittel-Wärmetauscher (32) den Elektromotor (5) kühlen.

3. Wärmemanagementvorrichtung nach Anspruch 1 oder 2, wobei die Systeme mit gesteuerten Ventilen (40, 50, 60) so eingerichtet sind, dass der Hochtemperaturkühler (16) und/oder der Kühler für sehr niedrige Temperaturen (17) den Verbrennungsmotor (3) kühlt.

4. Wärmemanagementvorrichtung nach einem der Ansprüche 2 oder 3, wobei die Systeme mit gesteuerten Ventilen (40, 50, 60) so eingerichtet sind, dass der Hochtemperaturkühler (16) und/oder der Niedertemperaturkühler (23) und/oder der Kühler für sehr niedrige Temperaturen (17) und/oder der Flüssigkeit-Kältemittel-Wärmetauscher (32) die Batterie (7) kühlen.

5. Wärmemanagementvorrichtung nach einem der Ansprüche 1 bis 54, wobei die Systeme mit gesteuerten Ventilen (40, 50, 60) so eingerichtet sind, dass sie eine einzige Kühlschleife bilden.

6. Wärmemanagementvorrichtung nach einem der Ansprüche 1 bis 4, wobei die Systeme mit gesteuerten Ventilen (40, 50, 60) so eingerichtet sind, dass sie zwei Kühlschleifen bilden.

7. Wärmemanagementvorrichtung nach einem der Ansprüche 1 bis 4, wobei die Systeme mit gesteuerten Ventilen (40, 50, 60) so eingerichtet sind, dass sie drei Kühlschleifen bilden.

8. Hybridkraftfahrzeug, das eine Wärmemanagementvorrichtung nach einem der Ansprüche 1 bis 7 beinhaltet.

## Claims

1. Thermal management device for a hybrid motor vehicle, said hybrid motor vehicle comprising a heat engine (3), an electric motor (5), a battery (7) for powering said electric motor (5), said thermal management device having:
- a general cooling circuit (1) designed to circulate a heat transfer fluid;
- heat exchangers (16, 17, 23, 32) for cooling the heat transfer fluid;
- interconnection means (40, 50, 60) between the various heat exchangers (16, 17, 23, 32) of the heat transfer fluid;
the interconnection means (40, 50, 60) comprising at least three distinct systems of controlled valves (40, 50, 60), each system of controlled valves (40, 50, 60) having at least four ports (41, 42, 43, 44; 51, 52, 53, 54; 61, 62, 63, 64) for interconnecting all or some of the various heat exchangers (16, 17, 23, 32) with a view to optimizing the cooling of the heat engine (3) and/or of the battery (7) and/or of the electric motor (5) by said heat transfer fluid circulating in at least one cooling loop, the heat exchangers being chosen from a list of heat exchangers comprising:
- a high-temperature radiator (16);
- a low-temperature radiator (23);
- a very-low-temperature radiator (17);
- a liquid/refrigerant heat exchanger (32),
**characterized in that** wherein the high-temperature radiator (16) and the very-low-temperature radiator (17) are fluidically coupled.

2. Thermal management device according to the preceding claim, wherein the systems of controlled valves (40, 50, 60) are arranged such that the high-temperature radiator (16) and/or the low-temperature radiator (23) and/or the very-low-temperature radiator (17) and/or the liquid/refrigerant heat exchanger (32) cool the electric motor (5).

3. Thermal management device according to Claim 1 or 2, wherein the systems of controlled valves (40, 50, 60) are arranged such that the high-temperature radiator (16) and/or the very-low-temperature radiator (17) cool the heat engine (3).

4. Thermal management device according to either one of Claims 2 and 3, wherein the systems of controlled valves (40, 50, 60) are arranged such that the high-temperature radiator (16) and/or the low-temperature radiator (23) and/or the very-low-temperature radiator (17) and/or the liquid/refrigerant heat exchanger (32) cool the battery (7).

5. Thermal management device according to any one of Claims 1 to 54, wherein the systems of controlled valves (40, 50, 60) are arranged to form a single cooling loop.

6. Thermal management device according to any one of Claims 1 to 4, wherein the systems of controlled valves (40, 50, 60) are arranged to form two cooling loops.

7. Thermal management device according to any one of Claims 1 to 4, wherein the systems of controlled valves (40, 50, 60) are arranged to form three cooling loops.

8. Hybrid motor vehicle comprising a thermal management device according to any one of Claims 1 to 7.
